# EUROPÄISCHE PATENTANMELDUNG

(11) **EP 2 058 098 A1**
(43) Veröffentlichungstag der Anmeldung: **13.05.2009**
(21) Anmeldenummer: 07021778.1
(22) Anmeldetag: 09.11.2007
(51) Int. Cl.: B27N 3/00, C09J 133/00

(54) **Verfahren zum Herstellen eines Holzwerkstoffes sowie Holzwerkstoff**

(71) Anmelder: Kerle, Thomas, 90765 Fürth (DE)
(72) Erfinder: Kerle, Thomas, 90765 Fürth (DE)
(74) Vertreter: Stammler, Wolfgang

(57) **Zusammenfassung**

Es wird ein Verfahren zum Herstellen eines Holzwerkstoffes angegeben, wobei Holzpartikel mittels eines Acrylats und/oder eines Polyacrylats als Bindemittel miteinander verpresst und dauerhaft zum Holzwerkstoff verbunden werden. Weiter wird ein Holzwerkstoff mit einer Vielzahl von Holzpartikeln angegeben, die miteinander verpresst und durch ein Acrylat und/oder ein Polyacrylat als Bindemittel miteinander dauerhaft verbunden sind. Der formaldehydfrei herstellbare Holzwerkstoff eignet sich in besonderer Weise zu einer Direktbedruckung, wobei der Farbstoff dauerhaft und fest angebunden ist.

## Beschreibung

Die Erfindung betrifft ein Verfahren zum Herstellen eines Holzwerkstoffes, wobei Holzpartikel miteinander verpresst und dauerhaft zum Holzwerkstoff verbunden werden. Die Erfindung betrifft weiter einen derart hergestellten Holzwerkstoff.

Unter einem Holzwerkstoff wird hierbei ein Werkstoff verstanden, der aus zerkleinertem Holz, d.h. Holzpartikeln, durch Verpressung dauerhaft zusammengefügt ist. Die Holzpartikel können hierbei als Hackschnitzel, Holzspäne, Holzstreifen oder als Holzfasern vorliegen. Dabei können die Holzpartikel in einheitlicher oder in unterschiedlicher Größe gegeben sein. Je nach Art der Holzpartikel und der Art ihres Zusammenfügens spricht man auch von einem Sperrholz, einem Verbundholz, einem Holzspanwerkstoff und einem Holzfaserwerkstoff, wobei besonders verdichtete Holzfaserwerkstoffe auch unter den Bezeichnungen MDF oder HDF bekannt sind, wobei die Abkürzung MDF einen mitteldichten und HDF einen hochdichten Faserwerkstoff bezeichnet.

Bei einem Sperrholz sind mehrere Lagen mit jeweils gleicher Ausrichtung der Holzpartikel übereinander gefügt, wobei die einzelnen Lagen insbesondere gegeneinander verdreht angeordnet sein können. Bei einem Verbundholz unterscheiden sich einzelne Lagen aus Holzpartikeln in ihrer Festigkeit. Insbesondere sind hierbei hochfeste Decklagen mit weniger festen Mittel- bzw. Zwischenlagen zusammengefügt. Bei einem Holzspanwerkstoff wiederum sind die Holzpartikel mit unterschiedlicher Ausrichtung ohne erkennbare Lagen zusammengefügt.

Ein Holzfaserwerkstoff wird aus Holzpartikeln wie Säge- und Spanhölzern oder aus holzfaserhaltigen Pflanzen, wie Flachs oder Raps hergestellt. Insbesondere werden auch Hackschnitzel eingesetzt. Die verwendeten Holzpartikel werden durch eine hydrochemische Vorbehandlung feinst zerfasert und der Faserstoff anschließend zu einem in Längs- und Querrichtung homogenen Holzwerkstoff verpresst. Je nach Verdichtungsgrad der Holzfasern spricht man, wie erwähnt, von einem MDF- oder einem HDF-Werkstoff. Die verdichteten und insbesondere die hoch verdichteten Holzfaserwerkstoffe werden insbesondere als Trägermaterial für hohe Belastungen eingesetzt. Ein bekannter Verwendungszweck ist beispielsweise für Laminat oder für Nut- und Federbretter zur Wand- oder Deckenvertäfelung.

Alle Holzwerkstoffe zeichnen sich gegenüber einem Massivholz dadurch aus, dass sie in beliebiger Form und insbesondere in Plattenform hergestellt werden können. Insbesondere Holzwerkstoffplatten sind aufgrund ihrer einfachen Weiterverarbeitbarkeit ein begehrter Grundstoff in der Möbel- und Holzindustrie. Holzfaserwerkstoffe können zudem ohne Nachbehandlung beliebig mechanisch bearbeitet und insbesondere abgelängt und angefräst werden. Aufgrund ihres homogenen und dichten Aufbaus bedarf es keiner besonderen Kantenbehandlung. So sind Holzfaserwerkstoffe beispielsweise leicht in die genannten Nut- und-FederBretter verarbeitbar.

Zur Veredelung werden die genannten Holzwerkstoffe in aufwändiger Art und Weise mit Echtholzfurnieren oder beständigen Oberflächenschichten aus Kunststoff, wie beispielsweise Melamin, belegt. Zunehmend gewinnt auch das Direktbedrucken von Holzwerkstoffen an Bedeutung. Dabei wird der Holzwerkstoff direkt mit einem Dekor und insbesondere mit einem Holzdekor durch Bedrucken mittels eines geeigneten Farblacks versehen. Das Dekor liegt dann als eine zusammenhängende Lackschicht dem Holzwerkstoff auf. Das direkte Bedrucken eines Holzwerkstoffes ist beispielsweise in dem Fachmagazin "Material + Technik, Möbel", Ausgabe 05/2007 auf S. 36-39 beschrieben.

Es ist Aufgabe der Erfindung, einen Holzwerkstoff anzugeben, der gegenüber dem Stand der Technik insbesondere hinsichtlich seiner Bedruckbarkeit weiter verbessert ist. Weiter ist es Aufgabe der Erfindung, ein geeignetes Verfahren zur Herstellung eines derartigen Holzwerkstoffes anzugeben.

Die auf eine Herstellung gerichtete Aufgabe wird erfindungsgemäß gelöst durch ein Verfahren zum Herstellen eines Holzwerkstoffes, wobei Holzpartikel mittels eines Acrylats und/oder eines Polyacrylats als Bindemittel miteinander verpresst und dauerhaft zum Holzwerkstoff verbunden werden.

Die Erfindung geht dabei in einem ersten Schritt von der Überlegung aus, dass ein direktes Bedrucken eines Holzwerkstoffes bislang mit deutlichen Nachteilen hinsichtlich der Dauerhaftigkeit, Lichtechtheit und Abriebfestigkeit der aufgedruckten Lackschicht verbunden ist. Die Erfindung erkennt nun in einem zweiten Schritt, dass eine Lackschicht physikalisch mit der Oberfläche des Holzwerkstoffes verbunden ist, so dass diese bei einer mechanischen Belastung oder bei Alterung dazu tendiert, sich von der Oberfläche zu lösen.

In einem dritten Schritt geht die Erfindung dann davon aus, dass sich die Dauerhaftigkeit der dem Holzwerkstoff aufgebrachten Bedruckung verbessern lässt, wenn eine reaktive Anbindung des Farbstoffs an den Holzwerkstoff gelingt. In umfangreichen Versuchen wurde hierzu nun überraschend herausgefunden, dass sich ein Acrylat und/oder ein Polyacrylat als ein Ersatz für die bisher bei der Herstellung von Holzwerkstoffen verwendeten Bindemittel eignet. Insbesondere kann ein Acrylat und/oder ein Polyacrylat als Ersatz für die zur Herstellung eines Holzwerkstoffes üblichen Harnstoffharze eingesetzt werden. Über ein als Bindemittel des Holzwerkstoffes eingesetzten Acrylat und/oder Polyacrylat kann nun aber auch der Farbstoff dem Holzwerkstoff dauerhaft angebunden werden, ohne dass weitere aufwändige Zwischenschritte notwendig wären.

Der Einsatz eines Acrylats und/oder eines Polyacrylats als ein Bindemittel für das Zusammenfügen von Holzpartikeln zu einem Holzwerkstoff bietet zusätzlich den großen Vorteil, dass ein solcher Holzwerkstoff formaldehydfrei herstellbar ist, denn es kann auf den Einsatz der Harnstoffharze gänzlich verzichtet werden. Harnstoffharze, auch Aminoplaste genannt, werden nämlich als Kondensationsprodukte aus Harnstoff und Aldehyden, insbesondere Formaldehyd, hergestellt.

Ein Holzwerkstoff, der unter Verwendung eines Acrylats und/oder eines Polyacrylats als Bindemittel hergestellt ist, zeigt über die OH-Gruppen der Zellulose eine Vernetzung der Holzpartikel mit dem polymerisierten Acrylat. An das Acrylat wiederum bindet sich reaktiv der beim Bedrucken verwendete Farbstoff, wodurch eine dauerhafte und abriebfeste Verbindung zwischen dem durch den Druck aufgetragen Farbstoff und dem Holzwerkstoff entsteht. Insbesondere wird der eingesetzte Farbstoff beim Bedrucken auch teilweise in das Volumen des Holzwerkstoffs eindringen und sich dort mit dem Acrylat und/oder Polyacrylat reaktiv verbinden. Auch dies erhöht die Beständigkeit des Drucks.

Es zeigt sich, dass ein derart hergestellter Holzwerkstoff, wobei überraschend ein Acrylat und/oder ein Polyacrylat als Bindemittel eingesetzt ist, eine bislang nicht bekannte ausgezeichnete Bedruckbarkeit aufweist, wobei sich der beim Drucken übertragene Farbstoff dauerhaft und abriebfest über das Acrylat und/oder das Polyacrylat mit dem Holzwerkstoff verbindet. Da der Holzwerkstoff zudem durchgehend das Acrylat und/oder das Polyacrylat als Bindemittel aufweist, ist der Holzwerkstoff unabhängig von seiner Bearbeitung gleichermaßen bedruckbar. Jede Schnittfläche, Seitenfläche, Einfräsung oder sonstige durch Bearbeitung entstandene Fläche ist mit dem Farbstoff gleichermaßen bedruckbar. Eine separate Behandlung von Kanten, Säge- oder Fräsflächen zum Zwecke der Herstellung einer Bedruckbarkeit ist nicht erforderlich. Der Holzwerkstoff ist prädestiniert zu einer Verwendung in der Möbelindustrie und zur Verarbeitung zu Bodenbelägen oder Wand- sowie Deckenvertäfelungen.

Unter dem Begriff eines Acrylats werden allgemein die Salze und insbesondere Esther der Acrylsäure verstanden. Acrylsäureesther mit der chemischen Formel H₂C = CH-COOR lassen sich leicht durch Licht oder Wärme zu Polyacrylaten polymerisieren. Der Rest R steht für gegebenenfalls funktionelle Substituenten, z.B. Hydroxi-, Amin- oder Epoxid-Gruppen, enthaltende Alkyl-Reste. Die eingesetzten Acrylate können als so genannte Reinacrylate oder als eine Mischung unterschiedlicher Acrylate vorliegen. Es ist aber auch möglich, Monomere, wie beispielsweise Methacrylate mit einzusetzen, über die weitere funktionelle Gruppen mit eingebracht werden können. Auch können weitere Zuschlagstoffe wie beispielsweise ein Brandhemmer oder dergleichen beigemengt werden.

Zur Herstellung des Holzwerkstoffes werden die Holzpartikel mittels des Acrylats und/oder des Polyacrylats miteinander verpresst und letztlich durch die auftretende Polymerisation dauerhaft zum Holzwerkstoff verbunden.

Die Erfindung ist nicht auf die Verwendung spezifischer Holzpartikel eingeschränkt. Vorteilhafterweise werden aber als Holzpartikel Holzfasern verwendet, die zu einem Holzfaserwerkstoff verpresst werden. Ein Holzfaserwerkstoff, bei dem die Holzpartikel fein und feinst zerfasert vorliegen, weist eine hohe Homogenität auf. Aus diesem Grund kann ein Holzfaserwerkstoff durch mechanische Nachbearbeitung wie Sägen oder Fräsen beliebig in Form gebracht werden, wobei sich exakte Profile, Kantenverläufe und Flächen ergeben. Da das als Bindemittel eingesetzte Acrylat und/oder Polyacrylat in einem Holzfaserwerkstoff im wesentlich gleichverteilt vorliegt, kann ein solcher Holzfaserwerkstoff mit einer hohen Qualität sowohl auf seinen unbearbeiteten als auch auf seinen mechanisch bearbeiteten Flächen bedruckt werden. Der Farbstoff bindet sich beim Bedrucken homogen an den Holzfaserwerkstoff an, wodurch sich beachtliche Ergebnisse erzielen lassen.

Für die Weiterverarbeitung des Holzwerkstoffes, insbesondere durch die Möbelindustrie, ist es zweckmäßig, die Holzpartikel zu einer Holzwerkstoffplatte zu verpressen und zu verbinden. Eine Holzwerkstoffplatte lässt sich einfach und leicht zu Möbelstücken, Platten oder Brettern beliebiger Dimension verarbeiten.

Für die Herstellung des Holzwerkstoffes können die Acrylate und/oder Polyacrylate beispielsweise als Harze eingesetzt werden, die mit den Holzpartikeln gut vermischt werden. Anschließend findet die Verpressung der mit dem Harz versehenen Holzpartikel zu dem Holzwerkstoff statt, wobei die Holzpartikel unter Aushärtung bzw. Polymerisation des Harzes dauerhaft zum Holzwerkstoff verbunden werden.

Vorteilhafterweise werden die Holzpartikel mit einer wässrigen, die Acrylate und/oder Polyacrylate enthaltenden Dispersion vermischt und anschließend unter gleichzeitiger Wärmezufuhr zum Holzwerkstoff verpresst. Dabei wird durch die Wärmezufuhr beim Verpressen die Polymerisation eingeleitet und unnötiges Wasser ausgetrieben. Über die OH-Gruppen der Zellulose sind die Holzpartikel durch die polymerisierten Acrylate dauerhaft miteinander verbunden. Der so hergestellte Holzwerkstoff ist insbesondere frei an Formaldehyd und - abgesehen von Wasser- auch frei an organischen Lösungsmitteln.

Insbesondere hat es sich hierbei als vorteilhaft erwiesen, wenn die Verpressung bei einem Druck zwischen 15 und 60 bar und einer Temperatur zwischen 150 und 250°C erfolgt.

In Versuchen wurde weiter festgestellt, dass es zur Herstellung des Holzwerkstoffes günstig ist, die wässrige Dispersion durch Zugabe von Acrylaten und/oder Polyacrylaten als Feststoff zu Wasser herzustellen, wobei der Feststoffanteil bevorzugt zwischen 10 und 40% beträgt. Aufgrund von Polymerisationsreaktionen ist es dabei nicht in jedem Fall möglich, den Feststoffanteil der fertigen Lösung arithmetisch aus der Zusammensetzung der Ausgangsstoffe zu bestimmen.

Vorteilhafterweise wird für die wässrige Dispersion ein Ethylacrylat und/oder ein Butylacrylat verwendet. Dabei sind insbesondere bevorzugt 60 bis 90 Gew.-% Ethylacrylat und 10 bis 40 Gew.-% Butylacrylat in einer Mischung vorhanden.

In einer weiter bevorzugten Ausgestaltung der Erfindung werden dem Acrylat und/oder dem Polyacrylat Comonomere mit funktionellen Gruppen zugesetzt. Über solche Comonomere sind die Eigenschaften des Acrylats und/oder des Polyacrylats als Bindemittel, wie z.B. Härte, Haftstärke oder Elastizität, einstellbar. Vorzugsweise werden als Comonomere Methacrylate mit Carboxy- und/oder Hydroxy-Gruppen als funktionelle Gruppen zugesetzt.

Der mit einem Acrylat und/oder einem Polyacrylat als Bindemittel hergestellte Holzwerkstoff wird bevorzugt abschließend mit einem Farbstoff bedruckt, wobei sich der Farbstoff reaktiv mit dem Acrylat und/oder dem Polyacrylat verbindet. Bei dem Druckvorgang wird eine dauerhafte chemische Verbindung zwischen dem Farbstoff und dem Holzwerkstoff hergestellt. Die Oberflächeneigenschaften werden hierbei nicht verändert. Aufwändige Lackschichten müssen nicht aufgebracht werden, um eine dauerhafte Bedruckung herzustellen. Durch eine einfache Bedruckung können somit dauerhafte und beständige Dekore, wie verschiedenste Holzmaserungen auf den Holzwerkstoff aufgebracht werden. Damit wird in technisch einfacher Art und Weise sowie kostengünstig ein täuschend echter Angleich des Holzwerkstoffs an ein Massivholz möglich. Insbesondere kann eine Veredelung des Holzwerkstoffs erzielt werden, indem dieser mit einer Dekorbedruckung in Gestalt der Maserung einer wertvollen Holzart versehen wird.

Als Farbstoff eignet sich insbesondere ein Dispersionsfarbstoff, wobei sich bei dem Druckvorgang das Lösungsmittel verflüchtigt oder verdampft und der in der Dispersion vorhandene Farbstoff auf den Holzwerkstoff übertragen wird. Insbesondere bei einer Temperatur- und/oder Druckbehandlung wird der in der Dispersion vorhandene Farbstoff in den gasförmigen Zustand und/oder in ein Aerosol überführt, wodurch sich eine leichte Übertragung auch auf unebene Oberflächen des Holzwerkstoffs erzielen lässt. Als ein Dispersionsfarbstoff kann weiter bevorzugt ein so genannter Sublimationsfarbstoff verwendet werden. Ein derartiger Farbstoff zeichnet sich dadurch aus, dass er bei einer Temperaturbehandlung vom festen Aggregatszustand direkt in den gasförmigen Zustand überführt wird. Derartige Farbstoffe eignen sich daher insbesondere zur Durchführung der Bedruckung mittels einer Temperaturbehandlung, wobei durch die Temperaturbehandlung rasch der zur Färbung notwendige gasförmige oder aerosolartige Zustand des Farbstoffs erreicht wird.

Als Farbstoff eignet sich insbesondere ein Anthrachinon-Farbstoff, also insbesondere auch ein Indanthren- oder Alycerin-Farbstoff, die sich vom Anthrachinon ableitet. Derartige Farbstoffe zeigen eine hohe Lichtechtheit.

Die Temperaturbehandlung bei der Aufbringung des Dispersionsfarbstoffs erfolgt bevorzugt mit einer Temperatur zwischen 150 und 220°C und mit einer Einwirkdauer zwischen 10 und 60 Sekunden.

Zweckmäßigerweise wird die Übertragung des Farbstoffes beim Bedrucken durch eine Druckbehandlung unterstützt. Hierdurch wird der Farbstoff gezielt in das Volumen des Holzwerkstoffes eingebracht.

Dem Farbstoff selbst können chemische und/oder physikalische Additive, wie z.B. Entschäumer und Füllstoffe, zugesetzt sein, um die Anbindung oder Dauerhaftigkeit der Druckfärbung zu unterstützen.

Die Bedruckung des Holzwerkstoffes erfolgt weiter bevorzugt mittels Tiefdruck oder mittels Digitaldruck. Beim Tiefdruck wird das Druckbild mittels eines Druckzylinders, der vertiefte, mit Farbstoff gefüllte Druckstellen aufweist, auf den Holzwerkstoff übertragen. Anstelle eines Druckzylinders ist auch eine Druckplatte verwendbar. Bei einem Digitaldruckverfahren geschieht der Druck beispielsweise ähnlich einem handelsüblichen Tintenstrahldrucker oder Plotter. Unter einem Digitaldruckverfahren wird dabei ein solches Druckverfahren verstanden, bei welchem die Druckvorlage digital gespeichert ist und die Ansteuerung der Druckmaschine mit Hilfe eines Computers erfolgt. Als Farbstoff, der beispielsweise mittels eines Tintenstrahldruckers durch Digitaldruck übertragen wird, kann eine Dispersion eines Sublimationsfarbstoffs verwendet werden.

Zweckmäßigerweise wird der Farbstoff mittels eines Zwischenträgers, insbesondere mittels eines Papiers oder einer Kunststofffolie, übertragen. Hierbei wird das Druckbild zunächst auf den Zwischenträger aufgebracht und anschließend auf den Holzwerkstoff übertragen. Hierzu wird der Zwischenträger dem Holzwerkstoff aufgelegt und der Farbstoff und damit das aufgetragene Druckbild beispielsweise unter Druck durch Erhitzung übertragen. Dabei kann eine beheizbare Presse verwendet werden, wie sie aus dem Stand der Technik bekannt ist. Typische Pressenparameter sind dabei ein Pressendruck zwischen 5 und 15 bar sowie eine Temperatur von etwa 180°C, die beispielsweise durch eine elektrische Beheizung erzielt werden kann. Anschließend wird der Zwischenträger abgezogen, so dass auf dem Holzwerkstoff bzw. in dem Volumen des Holzwerkstoffs das Druckbild übrig bleibt.

Alternativ eignet sich für eine Direktbedruckung des Holzwerkstoffs auch ein Flexodruck, wobei das Druckbild mittels einer flexiblen Druckplatte oder mittels eines flexiblen Druckzylinders übertragen wird. Dabei sind die Druckstellen dem Druckzylinder oder der Druckplatte erhaben aufgebracht.

Obschon es für die Erfindung nicht notwendig ist, kann zu einer ergänzenden Veredelung der Oberfläche oder zu einer weiteren Verbesserung der Dauerhaftigkeit der aufgebrachten Druckfarbe der bedruckte Holzwerkstoff mit einer abschließenden Schutzschicht aus einem selbstvernetzenden Polymer, insbesondere aus einem Polyacrylat, versehen werden. Insbesondere kann diese Schutzschicht farblos sein.

Die auf den Holzwerkstoff gerichtete Aufgabe wird erfindungsgemäß durch einen Holzwerkstoff gelöst, der eine Vielzahl von Holzpartikeln aufweist, die miteinander verpresst und durch ein Acrylat und/oder ein Polyacrylat als Bindemittel miteinander dauerhaft verbunden sind.

Weitere vorteilhafte Ausgestaltungen des Holzwerkstoffs sind den entsprechenden Unteransprüchen zu entnehmen. Dabei können die für das Verfahren zur Herstellung eines Holzwerkstoffs genannten Vorteile sinngemäß auf den Holzwerkstoff übertragen werden.

In einer besonders vorteilhaften Ausgestaltung weist der Holzwerkstoff eine eingebrachte und bedruckte Oberflächenstruktur auf. Da der mit einem Acrylat und/oder einem Polyacrylat als Bindemittel hergestellte Holzwerkstoff durchgehend bedruckbar ist, kann dem Holzwerkstoff eine einem Massivholz ähnliche Haptik eingeprägt werden. Diese reliefartige Oberfläche kann beispielsweise mittels flexibler Walzen, durch Digitaldruck mittels Tintenstrahlverfahren oder mittels eines erhitzten Zwischenträgers leicht mit einem geeigneten Druckbild bedruckt werden.

Das angegebene Verfahren zur Herstellung eines Holzwerkstoffs wird anhand des nachfolgenden Beispiels näher erläutert.

Als Holzpartikel werden Hackschnitzel eingesetzt, die zunächst in einem Wäscher gereinigt und aufbereitet werden. In einer hydrochemischen Vorbehandlung werden die Hackschnitzel drucklos und bei einer Temperatur von etwa 100°C vorgedämpft, was eine Zerfaserung begünstigt. Anschließend werden die vorbehandelten Hackschnitzel bei einem Druck bis zu 10 bar gekocht und abschließend feinst aufgemahlen.

Die feinst zerfaserten Holzpartikel werden anschließend getrocknet und mit einer geringen Restfeuchte abgeschieden.

Als Bindemittel wird eine wässrige Dispersion durch Zugabe der Reinacrylate Ethylacrylat und Butylacrylat zu Wasser hergestellt. Die zugegebene Acrylatmenge besteht dabei aus 70 Gew.-% Ethylacrylat und 30 Gew.-% Butylacrylat. Die Dispersion wird so hergestellt, dass der Feststoffanteil etwa 30% beträgt. Durch Polymerisierung der Acrylate in der Dispersion entsteht ein dickflüssiges Bindemittel, welches den zerfaserten Holzpartikeln zugemischt wird. Die Mischung aus Holzfasern und Bindemitteln wird homogen durchmischt.

Bei einer Temperatur von 230°C werden die mit dem Bindemittel versehenen Holzfasern unter einem Druck zwischen 40 und 50 bar zu einer Holzwerkstoffplatte verpresst. Dabei polymerisiert die Acrylatmischung unter Einschluss und Anbindung der Zellulose der Holzfasern. Das enthaltene Wasser wird dampfförmig ausgetrieben. Nach dem Pressvorgang sind die Holzfasern über die OH-Gruppen der Zellulose über das Polyacrylat miteinander dauerhaft verbunden.

Aus der Holzwerkstoffplatte werden durch Ablängen und Fräsen Profilbretter für einen Bodenbelag hergestellt. Anschließend werden die Profilbretter im Digitaldruckverfahren mittels der Tintenstrahl-Technologie unter Verwendung eines Sublimationsfarbstoffs mit einem einem Massivholz entsprechenden Dekorbild digital bedruckt. Dabei bindet sich der Sublimationsfarbstoff reaktiv und somit dauerhaft über die OH-Gruppen dem im Holzfaserwerkstoff homogen vorliegenden Polyacrylat an. Dabei ist der Farbstoff dem Holzfaserwerkstoff nicht nur an der Oberfläche, sondern auch teilweise im Volumen angebunden.

Es ergibt sich eine dauerhafte, abriebfeste, lichtechte und zudem täuschend echt aussehende Dekorbedruckung. Die Profilbretter können ohne weitere Behandlung verwendet werden.

Abschließend kann optional den bedruckten Profilbrettern noch eine farblose Schicht aus selbstvernetzenden Polymeren und insbesondere aus Polyacrylaten aufgebracht werden. Diese schützt die Oberfläche des Profilbretts zusätzlich vor mechanischem Abrieb.

## Patentansprüche

1. Verfahren zum Herstellen eines Holzwerkstoffes, wobei Holzpartikel mittels eines Acrylats und/oder eines Polyacrylats als Bindemittel miteinander verpresst und dauerhaft zum Holzwerkstoff verbunden werden.

2. Verfahren nach Anspruch 1,
wobei als Holzpartikel Holzfasern verwendet werden, die zu einem Holzfaserwerkstoff verpresst werden.

3. Verfahren nach Anspruch 1 oder 2,
wobei die Partikel zu einer Holzwerkstoffplatte verpresst und verbunden werden.

4. Verfahren nach einem der vorhergehenden Ansprüche,
wobei die Holzpartikel zunächst mit einer wässrigen, die Acrylate und/oder Polyacrylate enthaltenden Dispersion vermischt und anschließend unter gleichzeitiger Wärmezufuhr zum Holzwerkstoff verpresst werden.

5. Verfahren nach Anspruch 4,
wobei die Verpressung bei einem Druck zwischen 15 und 60 bar und bei einer Temperatur zwischen 150 °C und 250 °C erfolgt.

6. Verfahren nach Anspruch 4 oder 5,
wobei die wässrige Dispersion durch eine Zugabe von Acrylaten und/oder Polyacrylaten zu Wasser hergestellt wird, wobei der Feststoffanteil zwischen 10% und 40% beträgt.

7. Verfahren nach einem der vorhergehenden Ansprüche,
wobei als Acrylat ein Ethylacrylat und/oder ein Butylacrylat verwendet wird.

8. Verfahren nach einem der vorhergehenden Ansprüche,
wobei dem Acrylat und/oder dem Polyacrylat Comonomere mit funktionellen Gruppen zugesetzt werden.

9. Verfahren nach Anspruch 8,
wobei als Comonomere Methacrylate mit Carboxy- und/oder Hydroxygruppen als funktionelle Gruppen zugesetzt werden.

10. Verfahren nach einem der vorhergehenden Ansprüche,
bei welchem der Holzwerkstoff abschließend mit einem Farbstoff bedruckt wird, wobei sich der Farbstoff reaktiv mit dem Acrylat und/oder Polyacrylat verbindet.

11. Verfahren nach Anspruch 10,
wobei sich der Farbstoff reaktiv mit den OH-Gruppen des Acrylats und/oder des Polyacrylats verbindet.

12. Verfahren nach Anspruch 10 oder 11,
wobei als Farbstoff ein Dispersionsfarbstoff verwendet wird.

13. Verfahren nach Anspruch 12,
wobei der Dispersionsfarbstoff durch eine Temperaturbehandlung in den gasförmigen Zustand und/oder ein Aerosol überführt und auf diese Weise auf den Holzwerkstoff übertragen wird.

14. Verfahren nach Anspruch 13,
wobei die Temperaturbehandlung mit einer Temperatur zwischen 150 °C und 220 °C und mit einer Einwirkdauer zwischen 10 sec. und 60 sec. erfolgt.

15. Verfahren nach einem der Ansprüche 10 bis 14,
wobei die Übertragung des Farbstoffs beim Bedrucken durch eine Druckbehandlung unterstützt wird.

16. Verfahren nach einem der Ansprüche 10 bis 13,
wobei der Farbstoff mittels Tiefdruck oder mittels Digitaldruck auf den Holzwerkstoff übertragen wird.

17. Verfahren nach einem der Ansprüche 10 bis 16,
wobei der Farbstoff mittels eines Zwischenträgers, insbesondere mittels eines Papiers oder einer Kunststofffolie, übertragen wird.

18. Verfahren nach einem der Ansprüche 10 bis 16,
wobei der Farbstoff mittels eines Flexodrucks übertragen wird.

19. Verfahren nach einem der Ansprüche 10 bis 18,
wobei der bedruckte Farbstoff mit einer Schutzschicht aus einem selbstvernetzenden Polymer, insbesondere einem Polyacrylat, versehen wird.

20. Holzwerkstoff, insbesondere hergestellt nach einem der Ansprüche 1 bis 19, mit einer Vielzahl von Holzpartikeln, die miteinander verpresst und durch ein Acrylat und/oder ein Polyacrylat als Bindemittel miteinander dauerhaft verbunden sind.

21. Holzwerkstoff nach Anspruch 20,
wobei die Holzpartikel Holzfasern sind.

22. Holzwerkstoff nach Anspruch 20 oder 21,
welcher als eine Holzwerkstoffplatte ausgebildet ist.

23. Holzwerkstoff nach einem der Ansprüche 20 bis 22,
welcher mit einem Farbstoff bedruckt ist, der reaktiv dem Acrylat und/oder dem Polyacrylat, insbesondere über OH-Gruppen, angebunden ist.

24. Holzwerkstoff nach Anspruch 23,
wobei der Farbstoff ein Dispersionsfarbstoff ist.

25. Holzwerkstoff nach Anspruch 23 oder 24,
mit einer eingebrachten, bedruckten Oberflächenstruktur.
